# EUROPÄISCHE PATENTSCHRIFT

(11) **EP 1 306 960 B1**
(45) Veröffentlichungstag und Bekanntmachung des Hinweises auf die Patenterteilung: **13.08.2008**
(21) Anmeldenummer: 02023112.2
(22) Anmeldetag: 15.10.2002
(51) Int. Cl.: H02K 1/14, H02K 3/18, H02K 3/28, H02K 3/52

(54) **Elektromotor**
Electric motor
Moteur électrique

(30) Priorität: 24.10.2001 DE 10152499
(43) Veröffentlichungstag der Anmeldung: 02.05.2003
(73) Patentinhaber: Pierburg GmbH, 41460 Neuss (DE)
(72) Erfinder: Knoll, Andreas, 44267 Dortmund (DE); Zacher, Wolfgang, 04720 Döbeln (DE); Weinert, Michael, 04703 Leisnig (DE)
(74) Vertreter: Patentanwälte ter Smitten

(56) Entgegenhaltungen:
- EP-A- 0 849 857
- EP-A- 0 872 943
- FR-A- 2 369 717
- US-A- 3 130 336
- US-A- 4 752 707

## Beschreibung

Die Erfindung bezieht sich auf einen Elektromotor mit Innenrotor und Außenstator mit Statorwicklungen.

Der Stator wird bei bekannten Elektromotoren von einem Rückschlussring und davon radial nach innen abstehenden Stator-Poischenkeln mit Polschuhen gebildet. Zwischen zwei benachbarten Polschuhen besteht keine direkte Materialverbindung, um ein Maximum des für den Momentenaufbau notwendigen Magnetflusses durch Polschenkel und Rückschlussring zu führen. Ferner ist hierdurch ein magnetischer Kurzschluss zwischen zwei Polschuhen und damit eine schlechtere Leistungsdichte des Motors vermieden. Bei einem einstückig ausgebildeten Statorkörper ist daher eine Bewicklung der Stator-Polschenkel nur vom Statorzentrum aus möglich, was insbesondere bei kleinen Elektromotoren schwierig bzw. nicht möglich ist und ggf. einen hohen mechanischen Aufwand erfordert. Um dies zu vermeiden, können Stator-Polschenkel einzeln ausgebildet sein, zuerst einzeln gewickelt und anschließend zu einem geschlossenen Stator zusammengesetzt werden. Alternativ kann der Stator auch einen einstückigen Stator-Grundkörper aufweisen, dessen Stator-Polschenkel radial innen im Bereich der Polschuhe durch Kurzschlussstege mit den jeweils benachbarten Polschuhen verbunden sind. Die Polschenkel können von radial außen bewickelt werden. Nach dem Wickeln der Wicklungen wird ein Rückschlussring aufgesetzt, so dass die Polschenkel radial außenseitig einen magnetischen Rückschluss aufweisen.

Der nächstkommende Stand der Technik ist aus der Druckschrift US 3,130,336 bekannt. In dieser Druckschrift wird ein Elektromotor-Außenstator offenbart, dessen sechs seriell gewickelte Wicklungen durch einen einzigen ringförmigen Blechring gebildet werden. Die Stator-Polschenkel werden außenseitig durch einen separaten aufgesetzten Rückschlussring miteinander verbunden.

Aus der Druckschrift EP 08 49 857 A1 ist ein Elektromotor-Außenstator bekannt, der außen offen ist und verengte Kurzschlussstege zwischen den Polschuhen aufweist.

Aus der Druckschrift FR 77 30 586 ist ein Elektromotor-Stator bekannt, bei dem die Statorwicklungen mit einem einzigen Wicklungsband seriell gewickelt sind.

Dem gegenüber war es Aufgabe der vorliegenden Erfindung, das elektrische Verhalten des Elektromotors zu verbessern.

Diese Aufgabe wird erfindungsgemäß gelöst mit den Merkmalen des Patentanspruchs 1.

Zur Vereinfachung der Wicklung weist der Stator einen einstückigen Stator-Grundkörper auf, dessen Stator-Polschenkel radial innen im Bereich der Polschuhe durch Kurzschlussstege mit den jeweils benachbarten Polschuhen verbunden sind. Radial außenseitig sind die Stator-Polschenkel alleine durch einen separaten aufgesetzten Rückschlussring miteinander verbunden. Bei abgenommenem Rückschlussring sind die Stator-Polschenkel von außen zugänglich, so dass sich alle Stator-Polschenkel von außen bewickeln lassen. Durch die Kurzschlussstege zwischen den benachbarten Polschuhen wird der Stator-Grundkörper zusammengehalten, so dass ein Zusammenfügen einzelner Stator-Polschenkel entfällt. Die Stator-Polschenkel können auf einfache Weise von radial außen gewickelt werden, so dass auch ein sehr kleiner Außenstator auf diese Weise hergestellt werden kann. Einstückigkeit des Stator-Grundkörpers ermöglicht eine einfache und preiswerte Herstellung. Der Kurzschlusssteg zwischen den Stator-Polschuhen besteht aus demselben Material wie die Polschuhe und der Stator. Der Kurzschlusssteg bildet daher einen magnetischen Kurzschluss des betreffenden Statorzahnes zu beiden benachbarten Polschuhen bzw. Stator-Polschenkeln. Hierdurch wird die Leistungsdichte des Elektromotors zwar verschlechtert, jedoch lassen sich die Verluste so gering halten, dass sie insgesamt kaum ins Gewicht fallen. Durch die Kurzschlussstege zwischen den Stator-Polschuhen kann ein zylinderartiger und schlitzfreier Innenumfang des Stators realisiert werden. Hierdurch werden insbesondere bei sich schnell drehendem Rotor die Windabweichungsverluste und die entsprechenden Windgeräusche vermindert. Durch den magnetischen Kurzschluss über die Kurzschlussstege werden ferner die auf den Rotor wirkenden Rastmomente verringert, wodurch bei laufendem Motor auch die hierdurch bewirkte Schwingungsanregung verringert wird. Hierdurch wiederum wird die Geräuschemission reduziert und der mechanische Verschleiß verringert.

Insbesondere bei Elektromotoren hoher Leistungsdichte können die durch den Aufbau bedingten hohen Rastmomente und die daraus resultierende Geräuschentwicklung stark reduziert werden.

Gemäß der Erfindung sind alle Wicklungen auf den Stator-Polschenkeln mit einem einzigen ununterbrochenen Wicklungsdraht und in einem Zug gewickelt. Der Anfangs- und der Endpunkt des Wickeldrahtes liegen zusammen auf demselben Kontaktpunkt. Hierdurch wird das Wickeln der Wicklungen stark vereinfacht und beschleunigt und eine annähernde Fehlerfreiheit der Wicklungen und ihrer Kontaktierung sichergestellt.

Zwei parallelgeschaltete Wicklungen eines Wicklungspaares sind direkt miteinander und die Wicklungspaare wiederum seriell miteinander verbunden sein. Die Bildung von Wicklungspaaren zweier jeweils gleichzeitig zu bestromender Statorwicklungen erleichtert das Wickeln aller Wicklungen mit einem einzigen Wicklungsdraht. Die Wicklung eines Polschenkels kann in zwei Teilwicklungen geteilt werden. Bei dem sechspoligen Stator ist die Wickelfolge 1-4-2-5-3-6.

Die Wicklungsdraht-Verbindungen bilden zwischen den Wicklungspaaren einen gemeinsamen Sternpunkt. Der Sternpunkt wird vorzugsweise von einem einstückigen Sternpunktblech gebildet. Alle Wicklungsdraht-Verbindungen zwischen zwei Wicklungspaaren liegen auf diese Weise auf einem gemeinsamen Spannungspotential. Hierdurch wird ein einfacher Schaltungsaufbau und eine einfache Verdrahtung der Steuerungs- und Leistungselektronik zum elektronischen Kommutieren der Wicklungen realisiert.

Vorzugsweise liegt ein Zentralkörper des Sternpunktbleches zentral in einer Querebene und stehen Kontaktstifte zur Kontaktierung der Wicklungsdrahtverbindung zwischen zwei Wicklungspaaren axial davon ab. Auf diese Weise wird ein einfaches einstückiges Sternpunktblech gebildet, auf dem ggf. direkt die Steuerungs- und Leistungselektronik zum Kommutieren der Wicklungen befestigt werden kann. Der Wicklungsdraht kann durch ein automatisches Verschweißen, Verlöten oder Crimpen mit den Sternpunktblech-Kontaktstiften verbunden werden. So wird eine einfache, preiswerte und sichere Kontaktierung der entsprechenden Wicklungsdrahtabschnitte mit dem Sternpunktblech realisiert.

Zur sicheren Fixierung des Sternpunktbleches in einer Isolierscheibe können die Kontaktstifte Widerhaken aufweisen, die ein unerwünschtes Lösen des Sternpunktbleches von der Isolierscheibe ausschließen.

Gemäß einer bevorzugten Ausgestaltung ist der kleinste Querschnitt der Kurzschlussstege jeweils derart klein gewählt, dass maximal 20 % des magnetischen Flusses einer Wicklung hierüber kurzgeschlossen werden. Der kleinste Querschnitt des Kurzschlusssteges wird so gewählt, dass einerseits noch eine ausreichende mechanische Stabilität der Verbindung zwischen den beiden betreffenden Stator-Polschuhen besteht, andererseits jedoch die durch den magnetischen Kurzschluss hierüber zugelassenen Verluste nur gering ausfallen.

Vorzugsweise enthalten die Rotor-Polschuhe Seltene Erden und sind z.B. als NdFeB-Rotor ausgebildet. Hierdurch wird der Kurzschlussanteil des Kurzschlusssteges am gesamten erzeugten Magnetfluss möglichst gering und der Nutzanteil am erzeugten Magnetfluss möglichst hoch gehalten.

Der Kurzschlusssteg ist im Idealfall so klein, dass er die meiste Zeit magnetisch gesättigt ist, so dass seine magnetische Leitfähigkeit bei Sättigung gegen Null geht. Hierdurch wird der magnetische Verlust zuverlässig auf einen niedrigen Maximalwert begrenzt.

Gemäß einem Verfahren zum Herstellen eines Außenstators mit mehreren jeweils eine Wicklung tragenden Stator-Polschenkeln, deren zugeordnete Stator-Polschuhe über Kurzschlussstege jeweils mit den beiden benachbarten Stator-Polschuhen verbunden sind, sind die Verfahrensschritte vorgesehen:
- Herstellen des einstückigen Stator-Grundkörpers mit den Stator-Polschenkeln und den Stator-Polschuhen,
- Wickeln der Statorwicklungen auf den Stator-Polschenkeln von radial außen in einem Zug mit einem einzigen Wicklungsdraht und
- Aufsetzen eines separaten Rückschlussringes außenseitig auf die Stator-Polschenkel.

Mit diesem Verfahren wird auf sehr einfache und Kosten sparende Weise ein einstückiger Stator-Grundkörper bewickelt. Hierdurch wird das Wickeln, insbesondere von Stator-Grundkörpern mit kleinen Innendurchmessern, erheblich vereinfacht und beschleunigt.

Im folgenden wird unter Bezugnahme auf die Zeichnungen ein Ausführungsbeispiel der Erfindung näher erläutert.

Es zeigen:
- Fig. 1: einen Längsschnitt des erfindungsgemäßen Elektromotors,
- Fig. 2: einen Querschnitt des erfindungsgemäßen Elektromotors der Fig. 1,
- Fig. 3: eine Draufsicht auf eine der beiden Stirnseiten des Elektromotors der Fig. 1,
- Fig. 4: eine Darstellung der Wickelreihenfolge des insgesamt sechs Wicklungen aufweisenden Elektromotors der Fig. 1,
- Fig. 5: eine Seitenansicht eines Sternpunktbleches des Elektromotors der Fig. 1 und
- Fig. 6: eine Draufsicht auf das Sternpunktblech der Fig. 5.

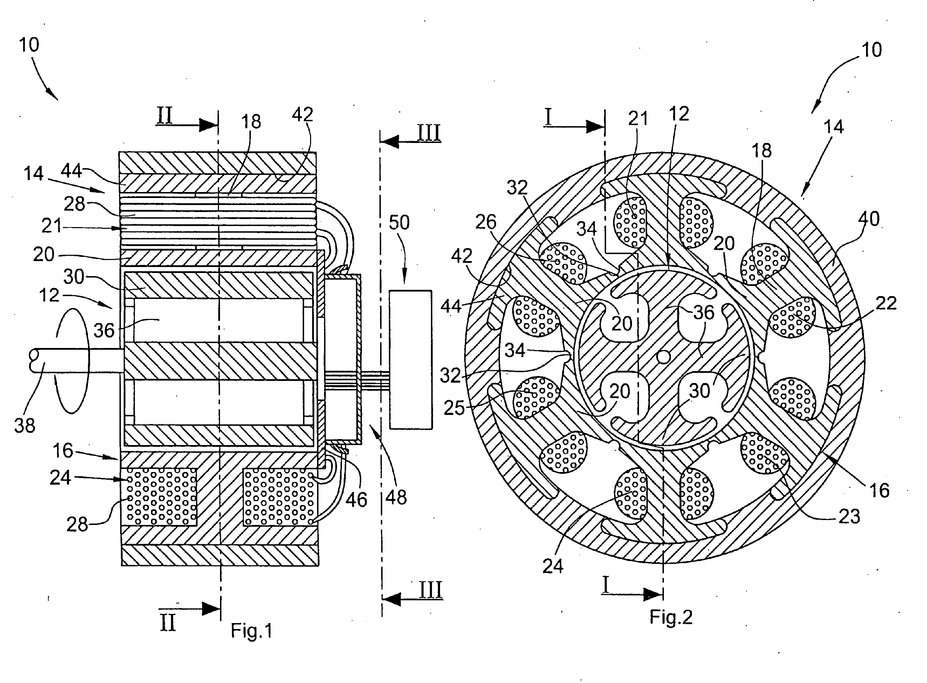

In den Fign. 1-3 sind verschiedene Schnitte bzw. Ansichten eines Elektromotors 10 dargestellt, wie er beispielsweise in Kraftfahrzeugen zum Antrieb von Nebenaggregaten eingesetzt wird. Der Elektromotor 10 wird elektronisch kommutiert, d.h. die Polwicklungen werden über eine entsprechende Steuer- und Treiberelektronik "kontaktlos" angesteuert.

Der Elektromotor 10 weist einen Innenrotor 12 und einen Außenstator 14 auf. Der Stator 14 wird von einem einstückigen Stator-Grundkörper 16 gebildet, der im wesentlichen aus sechs radialen Polschenkeln 18 und sich innenseitig jeweils daran anschließenden Polschuhen 20 besteht. Jeder Polschenkel 18 weist eine eine elektromagnetische Spule bildende Wicklung 21-26 auf, die alle aus einem einzigen Wicklungsdraht 28 gewickelt sind. Der Stator-Grundkörper 16 ist aus ferromagnetischen Blechen gebildet.

Der Rotor 12 weist vier Polschuhe 30 auf, die in einem Winkel von 90° zueinander angeordnet sind. Die Rotor-Pohlschuhe 30 bilden die axial äußeren Köpfe der vier Rotorarme 36. Die Rotorarme 36 laufen zentral zusammen in einer Rotorwelle 38. Der Rotorkörper besteht aus einem Seltene Erden enthaltenden Material, beispielsweise aus NdFeB.

Jeder Stator-Polschuh 20 ist über einen Kurzschlusssteg 32 mit den beiden jeweils benachbarten Stator-Polschuhen 20 verbunden, so dass der gesamte Stator-Grundkörper 16 einstückig ausgebildet ist. Der von den Stator-Polschuhen 20 gebildete Innenumfang ist zylindrisch und spaltfrei. Selbst bei hohen Rotordrehzahlen werden hierdurch die Windabweichungsverluste und Geräuschemissionen gering gehalten.

Die Stator-Polschuhe bilden einen Innenring, der im Bereich der Kurzschlussstege 32 eine ausgerundete Axialnut 34 aufweist. Die Axialnut 34 kann jedoch auch einen V-förmigen Querschnitt oder einen rechteckigen Querschnitt aufweisen. Durch die Kurzschlussstege 32 sind alle Stator-Polschenkel 18 und Stator-Polschuhe 20 starr und einstückig miteinander verbunden. Auf den Stator-Grundkörper 16 ist außen ein einstückiger Rückschlussring 40 aus ferromagnetischem Material aufgesetzt. Der Rückschlussring 40 weist an seinem Innenumfang sechs axiale Ausnehmungen 42 auf, in die entsprechend T-förmig geformte Kopfstücke 44 der Polschenkel 18 eingesteckt sind. Die Ausnehmungen und Kopfstücke können auch halbzylindrisch ausgebildet sein.

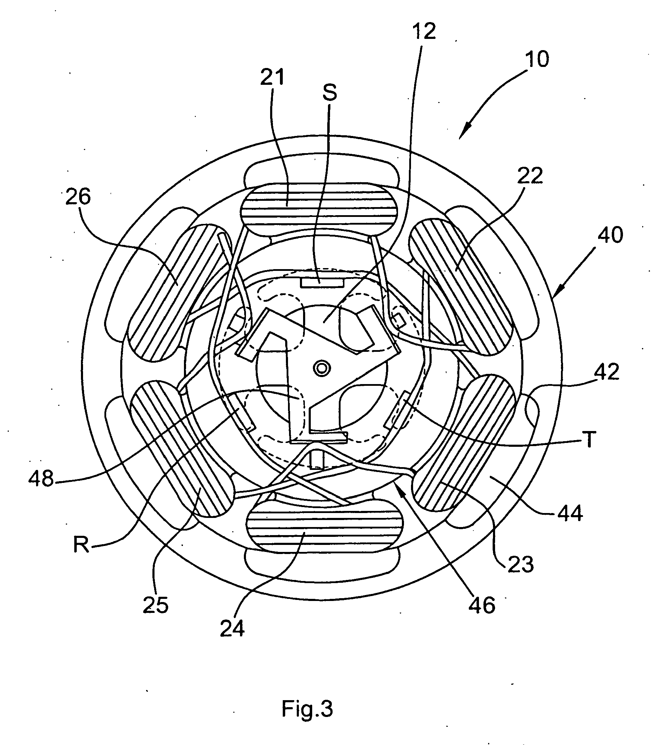

An einer der beiden Stirnseiten des Elektromotors 10 ist auf den axialen Endseiten der Stator-Polschuhe 20 eine elektrisch nicht leitende Isolierscheibe 46 befestigt, wie insbesondere in Fig. 3 dargestellt. Auf die Isolierscheibe 46 ist axial ein Sternpunktblech 48 aus elektrisch leitendem Material aufgesteckt. Das Sternpunktblech 48 bildet für die Wicklungen 21-26 einen zentralen Sternpunkt, an den ein Ende jeder Wicklung 21-26 angeschlossen ist.

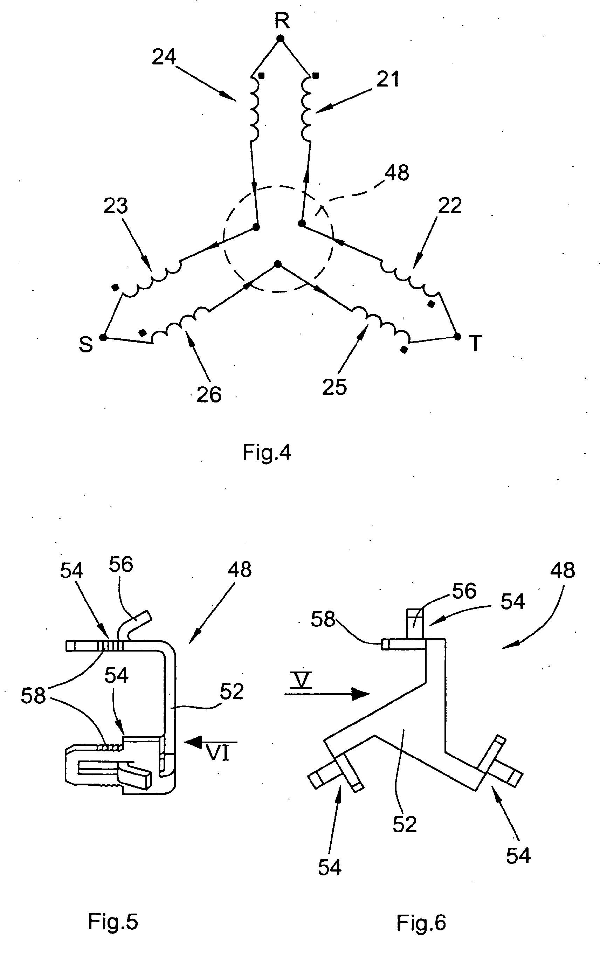

Wie in den Fign. 5 und 6 dargestellt, weist das Sternpunktblech 48 einen Zentralkörper 52 auf, der in einer Querebene liegt und von dem drei Kontaktstifte 54 axial abragen. Die Kontaktstifte 54 haben zwei Funktionen. Zum einen werden sie in die Kunststoff-Isolierscheibe eingesteckt, wodurch das Sternpunktblech 48 an der Isolierscheibe 46 befestigt und fixiert ist. Zum anderen weist jeder Kontaktstift 54 eine Kontaktfahne 56 auf, in der der vorbeigeführte Wicklungsdraht 28 eingehakt und ggf. verlötet oder verschweißt wird. Zur besseren Verankerung des Sternpunktbleches 48 in der Isolierscheibe 46 weist jeder Kontaktstift 54 seitlich Rastzähne 58 auf, durch die ein Herausfallen oder Herausziehen der Kontaktstifte 54 aus der Isolierscheibe 46 verhindert wird.

Ferner sind auf der Isolierscheibe 46 drei weitere Kontaktfahnen R,S,T angeordnet, mit denen die anderen Enden der Wicklungen 21-26 jeweils paarweise verbunden sind.

Die Wicklungsreihenfolge und Kontaktierung ist in Fig. 4 dargestellt. Die beiden einander gegenüberliegenden Wicklungen 21,24;22,25;23,26 sind jeweils parallel geschaltet und bilden ein Wicklungspaar. Die beiden Enden eines Wicklungspaares 21,24;22,25;23,26 sind jeweils mit dem Sternpunktblech 48 verbunden. Die Brücke zwischen den beiden Wicklungen eines Wicklungspaares 21,24;22,25;23,26 ist mit einer der drei Kontaktfahnen R,S,T verbunden.

In der Nähe des Sternpunktbleches 48 ist eine elektronische Steuervorrichtung 50 vorgesehen, die über drei elektrische Leitungen mit den Kontaktfahnen R,S,T verbunden ist. Die Steuervorrichtung 50 enthält eine Steuerelektronik und Treiberbausteine und dient der elektrischen Kommutierung der Wicklungen 21-26.

Bei der Statorherstellung werden die von der Außenseite aus zugänglichen Polschenkel 18 des Stator-Grundkörpers nacheinander bewickelt, so wie in Fig. 4 anhand der Pfeile dargestellt. Auf diese Weise lassen sich alle Wicklungen 21-26 mit einem einzigen Wicklungsdraht 28 bewickeln. Der Anfangs- und Endpunkt der Wicklung fallen zusammen an einem Kontaktpunkt des Sternpunktbleches 48 oder einer der Kontaktfahnen R,S,T. Nach dem Wickeln der Wicklungen 21-26 wird der Rückschlussring 40 außen auf Kopfstücke 44 der Stator-Polschenkel 18 aufgeschoben.

Durch die Statorgeometrie mit den von außen zugänglichen Stator-Polschenkeln 18, die innenseitig durch die Kurzschlussstege 32 zusammengehalten werden, wird eine erhebliche Vereinfachung und Zeitersparnis für das Wickeln der Wicklungen erreicht, was insbesondere für Elektromotoren mit kleinem Rotordurchmesser und großer Windungszahl gilt. Durch die Kurzschlussstege 32 werden insbesondere bei Elektromotoren mit hoher Leistungsdichte die Rastmomente reduziert, so dass sich auch die hieraus ergebende Schwingungsbeanspruchung und Geräuschemission reduziert. Eine weitere Verringerung der Rastmomente kann durch Nutschrägung erreicht werden.

Das automatische Wickeln der Statorwicklungen 21-26 wird durch die gewählte Wickelreihenfolge und die Parallelschaltung zweier Wicklungen stark vereinfacht bzw. erst ermöglicht. Verschaltungsfehler können praktisch ausgeschlossen werden.

Durch Verwendung eines einzigen Sternpunktbleches 48 zur Bildung eines Sternpunktes wird mit einfachen Mitteln und einem einzigen Bauteil eine Sternschaltung realisiert.

## Patentansprüche

1. Elektromotor mit Innenrotor (12) und Außenstator (14) mit Statorwicklungen (21-26), wobei
der Rotor (12) mehrere permanentmagnetische Polschuhe (30) aufweist,
der Stator (14) mehrere jeweils eine Wicklung (21-26) tragende Stator-Polschenkel (18) aufweist, die radial innen den Rotor-Polschuhen (30) zugewandte Stator-Polschuhe (20) aufweisen,
die Stator-Polschuhe (20) über einen Kurzschlusssteg (32) mit den benachbarten Stator-Polschuhen (20) verbunden sind, so dass alle Stator-Polschenkel (18) und -Polschuhe (20) einstückig miteinander ausgebildet sind,
die Stator-Polschenkel (18) außenseitig alleine durch einen separaten aufgesetzten Rückschlussring (40) miteinander verbunden sind, wobei die Wicklungen (21-26) bei entferntem Rückschlussring (40) von radial außen gewickelt wurden, und
alle Wicklungen (21-26) des Stators (14) mit einem einzigen ununterbrochenen Wicklungsdraht (28) gewickelt sind,
**dadurch gekennzeichnet,**
**dass** zwei parallelgeschaltete Wicklungen eines Wicklungspaars (21,24;22,25;23,26) direkt miteinander verbunden und die Wicklungspaare (21,24;22,25;23,26) seriell miteinander verbunden sind,
**dass** der Stator 6-polig ist und die Wickelfolge 1 - 4 - 2 - 5 - 3 - 6 aufweist, und
**dass** die Verbindungen zwischen den Wicklungspaaren (21,24;22,25;23,26) einen gemeinsamen Sternpunkt bilden.

2. Elektromotor nach Anspruch 1, **dadurch gekennzeichnet, dass** der Sternpunkt von einem einstückigen Sternpunktblech (48) gebildet wird.

3. Elektromotor nach Anspruch 2, **dadurch gekennzeichnet, dass** der Zentralkörper (52) des Sternpunktbleches (48) in einer Querebene liegt und Kontaktstifte (54) axial davon abstehen.

4. Elektromotor nach einem der Ansprüche 1-3, **dadurch gekennzeichnet, dass** der kleinste Querschnitt der Kurzschlussstege (32) derart klein gewählt ist, dass maximal 20 % des von einer Wicklung (21-26) erzeugten magnetischen Flusses hierüber kurzgeschlossen wird.

5. Elektromotor nach einem der Ansprüche 1-4, **dadurch gekennzeichnet, dass** die Stator-Polschuhe (20) einen geschlossenen Innenring bilden, der im Bereich der Kurzschlussstege (32) jeweils eine Axialnut (34) aufweist.

6. Elektromotor nach einem der Ansprüche 1-5, **dadurch gekennzeichnet, dass** die Rotor-Polschuhe (30) aus einem Seltene Erden enthaltenden Material bestehen.

## Claims

1. An electric motor comprising an inner rotor (12) and an outer stator (14) with stator windings (21-26), wherein
the rotor (12) comprises a plurality of permanent magnetic pole shoes (30),
the stator (14) comprises a plurality of stator pole legs (18) supporting respectively one winding (21-26) and provided with stator pole shoes (20) radially inwardly facing towards said rotor pole shoes (30),
the stator pole shoes (20) are connected to the adjacent stator pole shoes (20) via a short-circuit bar (32) in such a manner that all stator pole legs (18) and stator pole shoes (20) are integral with each other,
the stator pole legs (18) are on the outer side connected to each other only by a separate short-circuit ring (40) mounted thereto, wherein the windings (21-26) have been wound radially from the outside while the short-circuit ring (40) is removed, and
all windings (21-26) of the stator (14) are wound by a sole uninterrupted winding wire (28),
**characterized in**
**that** two mutually parallel windings of a pair of windings (21,24;22,25; 23,26) are connected directly to each other and that the pairs of windings (21,24;22,25;23,26) are connected serially to each other,
**that** the stator (14) is of the 6-pole type and is configured with the winding sequence 1 - 4 - 2 - 5 - 3 - 6, and
**that** the connections between the pairs of windings (21,24;22,25;23, 26) are arranged to form a common star point.

2. The electric motor according to claim 1, **characterized in that** said star point is formed by a one-pieced star-point sheet (48).

3. The electric motor according to claim 2, **characterized in that** the central body (52) of the star-point sheet (48) is arranged in a transverse plane and comprises contact pins (54) axially extending therefrom.

4. The electric motor according to any one of claims 1-3, **characterized in that** the smallest cross section of the short-circuit bars (32) is selected to be sufficiently small to the effect that no more than 20% of the magnetic flux generated by a winding (21-26) are shorted by them.

5. The electric motor according to any one of claims 1-4, **characterized in that** the stator pole shoes (20) form a closed inner ring which in the region of the short-circuit bars (32) is provided with a respective axial groove (34).

6. The electric motor according to any one of claims 1-5, **characterized in that** the rotor pole shoes (30) are made of a material comprising rare earths.

## Revendications

1. Moteur électrique avec rotor intérieur (12) et stator extérieur (14) avec enroulements de stator (21-26), dans lequel
le rotor (12) comprend plusieurs de cornes polaires (30) de type aimant permanent,
le stator (14) comprenant plusieurs branches de corne polaire (18) du stator, chacune portant un enroulement (21-26), les branches comprenant, au côté radial intérieur, des cornes polaires (20) du stator tournées vers les cornes polaires (30) du rotor,
les cornes polaires (20) du stator sont reliées aux cornes polaires (20) du stator voisines par une âme de court-circuit (32) de sorte que toutes les branches de corne polaire (18) du stator et les cornes polaires (20) du stator sont formées d'une manière intégrale,
les branches de corne polaire (18) du stator sont reliées l'une à l'autre, à l'extérieur, seulement par une bague de blindage (40) particulière coiffée, les enroulements (21-26) étant enroulés du côté radial extérieur, et
tous les enroulements (21-26) du stator (14) sont enroulés à parti d'un seul fil d'enroulement (28) continu,
**caractérisé en ce**
**que** deux enroulements d'une paire d'enroulements (21, 24; 22, 25; 23, 26), couplés en parallèle, sont directement reliés, et que les paires d'enroulements (21, 24; 22, 25; 23, 26) son couplés en série entre eux,
**que** le stator est hexapolaire et présent la séquence d'enroulement 1-4-2-5-3-6, et
**que** les raccords entre les paires d'enroulements (21, 24; 22, 25; 23, 26) forment un point neutre commun.

2. Moteur électrique selon la revendication 1, **caractérisé en ce que** le point neutre est formé par une tôle de point commun (48) formée d'une seule pièce.

3. Moteur électrique selon la revendication 2, **caractérisé en ce que** le corps central (52) de la tôle de point neutre (48) est situé dans un plan transversal et que des broches de contact (54) y saillissent axialement.

4. Moteur électrique selon une des revendications 1-3, **caractérisé en ce que** la section la plus petite des âmes de court-circuit (32) est choisie aussi petite qu'au maximum 20% du flux magnétique généré par un enroulement (21-26) est court-circuité par celle-ci.

5. Moteur électrique selon une des revendications 1-4, **caractérisé en ce que** les cornes polaires (20) du stator forment un anneau intérieur fermé, comprenant une rainure axiale (34) respective au niveau des âmes de court-circuit (32).

6. Moteur électrique selon une des revendications 1-5, **caractérisé en ce que** les cornes polaires (30) du rotor sont formées d'un matériau contenant de terres rares.
